# EUROPÄISCHE PATENTSCHRIFT

(11) **EP 1 438 829 B1**
(45) Veröffentlichungstag und Bekanntmachung des Hinweises auf die Patenterteilung: **04.03.2015**
(21) Anmeldenummer: 02779143.3
(22) Anmeldetag: 07.10.2002
(51) Int. Cl.: H04W 28/06, H04L 29/06, H04W 8/26, H04L 12/723

(54) **VERFAHREN UND VORRICHTUNG ZUR ABBILDUNG VON NETZWERK-HEADERN AUF MPLS-HEADER IN BEARER-ARCHITEKTUREN**
METHOD AND DEVICE FOR MAPPING NETWORK HEADERS ONTO MPLS HEADERS IN BEARER ARCHITECTURES
PROCEDE ET DISPOSITIF POUR TRANSPOSER DES EN-TETES RESEAU EN EN-TETES MPLS DANS DES ARCHITECTURES SUPPORTS

(30) Priorität: 22.10.2001 DE 10152011
(43) Veröffentlichungstag der Anmeldung: 21.07.2004
(73) Patentinhaber: Nokia Solutions and Networks GmbH & Co. KG, 81541 Munich (DE)
(72) Erfinder: GRIMMINGER, Jochen, 80638 München (DE)
(74) Vertreter: Weidel, Gottfried
(86) Internationale Anmeldenummer: PCT/DE2002/003786
(87) Internationale Veröffentlichungsnummer: WO 2003/039104

(56) Entgegenhaltungen:
- EP-A- 1 220 508
- WO-A-01/22658
- WO-A-01/71986
- ALI SALMAN M ET AL: "THE ROLE OF MULTI-PROTOCOL LABEL SWITCHING IN THE NEW 'DATAWAVE' NETWORK" JOURNAL OF THE INSTITUTION OF BRITISH TELECOMMUNICATIONS ENGINE ERS, BRITISH TELECOMMUNICATIONS ENGINEERING, LONDON, GB, Bd. 1, Nr. 3, Juli 2000 (2000-07), Seiten 117-121, XP000959155 ISSN: 1470-5826

## Beschreibung

Durch die Einführung von paketorientierten Technologien wie UMTS und GPRS ist zu erwarten, dass die Datenübertragung in Zukunft vermehrt drahtlos erfolgen wird. Hierbei wird sich die Datenübertragung nicht nur auf die Übertragung von Sprachinformationen beschränken lassen, sondern es werden vermehrt andere Dienste, wie sie z. B. im Internet angeboten werden, drahtlos genutzt.

Momentan sind die meisten Mobilfunknetze verbindungsorientiert aufgebaut. Diese Verbindungsorientierung liegt zumindest zwischen dem Endgerät und der Basisstation vor. Die Backbone-Netze weisen hingegen oftmals eine paketorientierte Struktur auf. Gerade bei Sprach- und Datenübertragungen wird jedoch nicht die ganze Bandbreite benötigt, da eine Datenübertragung nur zu diskreten Zeitpunkten erfolgt und oftmals ein großer Zeitraum zwischen den einzelnen, tatsächlichen Informationsübertragungen liegt. Somit wird ein Großteil der Bandbreite verschenkt. Paketorientierte Netzwerke haben den Vorteil, dass lediglich die benötigte Bandbreite durch Pakete verbraucht wird. Der Datenstrom wird hierbei in kleine Pakete zerlegt. Nachteilig ist jedoch bei diesem Ansatz, dass unter Umständen bei einem größeren Bedarf nicht genügend Bandbreite vorhanden ist. Dies führt gerade bei Sprachübertragungen zu einem erheblichen Qualitätsverlust, der sich in einer schlechten Tonqualität widerspiegelt. Ein Qualitätsmanagement ist für solche Netzwerke notwendig. Weiterhin ist es notwendig, dass die Datenpakete schneller durch das Netzwerk geleitet werden. Um dies zu erreichen, sind schnelle Switches und Router gefragt.

Um in Zukunft auch dem vermehrten Datenaufkommen bei kabellosen Teilnehmern gerecht zu werden, werden Zugangsnetze für Mobilfunknetze in Zukunft auch IP-basiert sein, d. h. zwischen den Basisstationen und dem Übergang in das Core-Netzwerk liegt ein IP-basiertes Transportnetz, das so genannte RAN (Radio Access Network). Endgeräte verbinden sich über eine Luftschnittstelle zunächst mit einer Basisstation BS, welche die Luftschnittstelle terminiert. Sodann werden die Daten des Endgerätes MH durch einen Zugangsrouter AR geroutet. In der Regel bilden die miteinander verbundenen Zugangsrouter das Radio-Access-Netzwerk. Der AR sorgt für die Weiterleitung an den Radio-Access-Server (RAS) oder weitere Router.

Aufgrund der unterschiedlichen Topologien der Netzwerke wird oftmals ein Protokolltunnel zwischen Endgerät MH und Zugangsrouter RAS bzw. zwischen AR und RAS sowie zwischen AR und AR aufgebaut. Ein Protokolltunnel liegt immer dann vor, wenn ein erstes Übertragungsprotokoll in einem zweiten Übertragungsprotokoll gekapselt ist. Man spricht vom Einpacken der Pakete eines ersten Übertragungsprotokolls in die Pakete des zweiten Übertragungsprotokolls. Dies ist z. B. immer dann notwendig, wenn auf einem Netzwerk-Segment das erste Übertragungsprotokoll nicht unterstützt wird. In diesem Netzwerksegment muss dann das Paket mit Hilfe des zweiten Übertragungsprotokolls geroutet werden. Durch den Protokolltunnel sind eine Reihe von Vorteilen gegeben.

Für das Endgerät kann im Transportnetz RAN Mobilität mit beliebigen Mitteln transparent unterstützt werden. Dieser Vorteil basiert darauf, dass die Pakete nicht verändert werden und somit die Art und Form des Transportes durch die Topologie des Netzwerkes bestimmt werden können, ohne dass eine Veränderung der Nutzdaten zu befürchten ist.

Nicht IP-basierte Daten (z. B. komprimierte und/oder verschlüsselte IP-Pakete, Sprache) können einfach über das Transportnetz RAN zu entsprechenden Umsetzern am Rand des Transportnetzes RAN geführt werden, sofern die verwendete Tunneltechnologie den Transport von Datenpaketen anderer Protokolle als IP unterstützt.
Bekannte Verfahren benutzen Tunnel entweder vom Endgerät MH bis zum RAS oder vom Zugangsrouter AR zum RAS. Dabei können unterschiedliche Technologien zum Einsatz kommen, z. B. PPP, IP-in-IP.

Auf Grund des simplen Aufbaus und der hohen Performance kann auch das Multiprotocol Label Switching (MPLS, IETF Proposed Standard, [RFC 3031]) mit Vorteil als Tunneltechnologie eingesetzt werden.

Bei MPLS-Netzen wandert ein Paket von einem Router zum nächsten. Jeder Router trifft eine unabhängige Entscheidung hinsichtlich des Weiterleitens. Das heißt, jeder Router analysiert den Header des Paketes, und jeder Router durchläuft ein Programm mit dem Router-Algorithmus. Jeder Router wählt eine neue Route in Abhängigkeit des Ergebnisses des Router-Algorithmus. Die Auswahl der nächsten Route erfolgt somit in zwei Schritten. Der erste Schritt partitioniert die gesamte Menge der möglichen Pakete in eine Menge von äquivalenten Klassen (FEC). Der zweite Schritt bildet jede FEC auf eine Route ab. Was die Entscheidung der Weiterleitung angeht, wird keine Unterscheidung zwischen den Paketen gemacht, die der gleichen FEC angehören. Unterschiedliche Pakete, die der gleichen FEC angehören, können nicht unterschieden werden. Hierin unterscheidet sich die vorliegende Erfindung. Um Labels als Adressen verwenden zu können, muss eine eindeutige Zuordnung zu einer FEC bestehen. Das heißt, eine FEC umfasst immer nur ein Label. Dieses Label wird nur einer Zieladresse zugeordnet.

Als unterschiedliche Pakete betrachtet man die Pakete, die eine unterschiedliche Ziel- oder Ursprungsadresse aufweisen. Um jedoch MPLS für die vorliegende Erfindung verwenden zu können, muss ein Pfad und somit die Äquivalenzklasse eindeutig sein. Das heißt, eine Äquivalenzklasse steht für ein eindeutiges Quell- und Ziel-Endgerät bzw. Entity. In einem MPLS-Netz erfolgt die Zuordnung zu einer FEC nur einmal, nämlich dann, wenn das Paket in das Netzwerk eintritt. Die FEC, der ein Paket zugeordnet ist, ist als kurzer Wert codiert, der als Label bezeichnet wird. Wenn ein Paket zur nächsten Route gesendet wird, so wird das Label mitgesandt. Bei den folgenden Routern wird keinerlei Analyse der weiteren Inhalte des Paketes vorgenommen. Es wird lediglich das Label überprüft. Das Label wird als Index für eine Tabelle verwendet, aus der die nächste Route und das nächste Label entnommen werden können. Das alte Label wird durch das neue Label ersetzt und das Paket wird weitergeleitet in die nächste Route. In einem MPLS-Netz wird das Weiterleiten nur durch die Labels gesteuert. Dies hat eine Reihe von Vorteilen. So müssen die Router nur geringe Fähigkeiten haben. Sie müssen lediglich in der Lage sein, das Label zu analysieren und in einer Tabelle zu überprüfen, welche Route diesem Label zugeordnet ist, um das alte Label durch ein neues Label zu ersetzen. Weiterhin kann durch diese einfachen Aufgaben ein hoher Durchsatz realisiert werden. Weitere Vorteile können der [RFC 3031] entnommen werden.

Im Folgenden werden einige Grundsätze definiert. Ein Label ist ein kurzer, örtlich signifikanter Bezeichner, der eine feste Länge aufweist, um eine FEC zu identifizieren. Das Label dient zur Repräsentation einer FEC, der das Paket zugeordnet ist. In der grundsätzlichen Verwendung der FEC wird diese auf der Grundlage der Zieladressen des Netzwerk-Layers zugeordnet. Es handelt sich jedoch in der ursprünglichen Verwendung der FEC nicht um eine Kodierung der Netzwerkadresse. Genau an diesem Punkt macht die vorliegende Erfindung einen Unterschied. Durch die eindeutige Zuordnung des Labels zu einem eindeutigen Pfad handelt es sich um eine Kodierung einer Netzwerkadresse.

Um sicherzustellen, dass die Router die Pakete denselben Äquivalenzklassen zuordnen, müssen die Router regelmäßig Informationen austauschen, aus denen ersichtlich ist, welche Pakete einem Label zugeordnet werden. Weiterhin ist es wichtig, dass nicht dieselben Labels von unterschiedlichen Routern verwandt werden, soweit hierdurch eine eindeutige Identifikation des vorhergehenden Routers unmöglich wird. Weiterhin ist darauf hinzuweisen, dass Up-Streams und Down-Streams unterschiedlich behandelt werden. So weisen diese nicht unbedingt dieselben Labels auf. In der MPLS-Architektur wird die Entscheidung, ein bestimmtes Label an eine bestimmte Äquivalenzklasse zu binden, durch den Router vorgenommen, der Down-Stream in Bezug zu dieser Bindung ist. Der Router, der Down-Stream ist, informiert dann den Router, der Up-Stream ist, von dieser Bindung. Diese Information kann z. B. als Huckepackinformation auf anderen Paketen übertragen werden.

In einer weiteren Ausgestaltung unterstützt MPLS eine Hierarchie, wobei das Bearbeiten der mit Labeln versehenen Pakete vollständig unabhängig von dem Level der Hierarchie ist. Ein Paket, das kein Label aufweist, kann als Paket betrachtet werden, dessen Stack leer ist. Die Verwendung des Stacks wird deutlich, wenn man vom Tunneln der Pakete spricht. Ein solches Tunneln kann dem Dokument [RFC 3031] entnommen werden. Pakete werden immer dann getunnelt, wenn sie durch einen Netzwerkpfad geführt werden, der zwischen zwei Routern liegt, wobei dieser Netzwerkpfad wiederum eine Reihe von Routern umfassen kann. Wurde z. B. ein expliziter Pfad vorgegeben, der die Router R1 bis R4 umfasst, und liegt zwischen dem Router R1 und R2 ein Pfad, der die Router R1.1, R1.2, R1.3 umfasst, so wird ein weiteres Label durch den Router R1 auf den Stack gepusht. Die Router R1.1, R1.2, R1.3 arbeiten nun auf diesem neuen zweiten Element. Sobald das Paket bei Router R2 ankommt, wird das oberste Element vom Stack gepoppt. Problematisch wird es, wenn kein Label auf dem Stack ist. Bei der normalen MPLS-Architektur wird die Netzwerkadresse (im Normalfall die IP-Adresse) analysiert, um eine Äquivalenzklasse zu bestimmen.

MPLS bietet zwei Arten der Routenauswahl. Die eine Routenauswahl legt die Route bereits am Startpunkt fest. Es werden die einzelnen Router bestimmt, die durchlaufen werden müssen. Es handelt sich hierbei um ein explizites Routen. Beim hop-byhop-Routen werden die Router nicht explizit festgelegt, sodass jeder Router anhand seiner Tabellen festlegen kann, welches der nachfolgende Router sein soll. Die vorliegende Erfindung kann mit beiden Möglichkeiten der Routenauswahl betrieben werden.

Bisherige Ansätze zur Verwendung von MPLS gehen von einer Nutzung von MPLS im Netzinneren aus, z. B. im Mobilfunknetz zwischen Zugangsrouter AR und RAS.

Wechselt das Endgerät MH im laufenden Betrieb von Router ARx zu Router ARy, so muss es sich erneut beim Zugangsrouter anmelden (authentifizieren). Bei dieser Bewegung des Endgeräts zu einer anderen Basisstation oder einem anderen Zugangsrouter wird nun dieser Tunnel mittels Signalisierung zum aktuellen Ankerpunkt umgelegt. Dazu muss allerdings in verschiedenen Ausprägungen der Realisierung im Access-Netz IPv6 (IP-Version 6) unterstützt werden. Wie das Mapping solcher Architekturen auf bestehende IP-Backbones ergeben hat, wird darin hauptsächlich eine Form von MPLS unterstützt. IP-Netze werden also als Overlay/VPN (Virtual Privat Network)-Strukturen realisiert und deren Pakete nur noch schnell geswitched, was weniger Netzlast und Overhead bei der Routeroperation bedeutet. Jedoch entsteht bei einem Tunneln der Informationen ein Overhead hinsichtlich der Größe der Informationspakete. IPv6-Header verursachen mehr als 40 Byte Header-Overhead bei einer Transportdatengröße von durchschnittlich 60 Byte (IPv6 incl. Routing-Header), deren Nutzdaten wiederum nur etwa 20 Byte (VoIP) umfassen [RFC 3031, RFC 2460]. Mittels eines Shim-Headers bzw. MPLS-Headers von z. B. MPLS werden jeweils nur 4 Byte induziert. Ein Shim-Header, auch MPLS-Header, umfasst neben dem Label, dass ca. 20 Bits ausmacht, weitere Status- und Verwaltungsinformationen. Grundsätzlich sind eine eindeutige Identifizierung des Punkt-zu-Punkt-Links mit seinen Eigenschaften, z. B. Quality of Service (QoS), sowie natürlich die des jeweiligen Bearers notwendig.

Bekannte Verfahren zur Reduzierung des Overhead bestehen aus einem rechenintensiven Kompressionsverfahren [RFC 2507] (price-rohc-epic-00.txt [www.ietf.org/internet-drafts]), das die einzelnen Komponenten bzw. Router unterstützen müssen. Diese Verfahren müssen während der Verbindung den dynamischen Status verwalten, wodurch viele Ressourcen (Memory, CPU) verbraucht werden und somit den Komponenten in der Leistungsfähigkeit Grenzen gesetzt werden. Bei einer Vielzahl von Endgeräten (mehreren tausend Handys), die von einer Komponente bedient werden müssen, kann es zu einer Überlastung des Systems kommen.

Es ist jedoch darauf hinzuweisen, dass die genannten Probleme nicht nur auf Netzwerke beschränkt sind, die mit mobilen Endgeräten betrieben werden. Vielmehr entsteht dieses Problem immer dann, wenn unterschiedliche Netzwerktopologien und Architekturen aufeinander treffen und ein Tunneln von Informationspaketen notwendig wird. Eine Beschränkung der vorliegenden Erfindung auf Mobilfunk-Netze ist nicht beabsichtigt.

Das Dokument WO 01/71986 A offenbart ein Verfahren, bei dem Komponenten eines Netzwerks so konfiguriert werden, dass MPLS-Pfade zu jeweiligen Endgeräten eindeutig sind, wobei die MPLS-Pfade durch eine eindeutige Endgerätekennung, die in MPLS-Headern abgebildet ist, gekennzeichnet sind.

Aufgabe der vorliegenden Erfindung ist es, ein Verfahren bereitzustellen, dass die Größe der Header reduziert.

Die Aufgabe wird maßgeblich durch ein Verfahren und Vorrichtungen mit den Merkmalen der unabhängigen Ansprüche gelöst. Grundsätzlich sind eine eindeutige Identifizierung des Punkt-zu-Punkt-Links, das heißt des MPLS-Pfades, mit seinen Eigenschaften (z. B. QoS (Quality of Service)) sowie natürlich die des jeweiligen Bearers (Verbindungsdienst) notwendig. Dazu reichen allerdings zwei oder mehr MPLS-Header bei weitem aus, wobei sogar nur einer davon komponentenbezogene Bedeutung haben muss. Der zweite kann netzwerkweit, wie bei MPLS üblich, dynamisch verwendet werden. In der Regel ist man hierdurch nicht nur auf MPLS begrenzt (e. g. PPP).

Die äußeren MPLS-Header dienen zur Identifizierung des Punkt-zu-Punkt-Links und seiner Eigenschaften, wie sie im IPv6-Header definiert sind. Diese können sogar, wenn nötig, vom Netz verändert werden, solange der Link-Scope bei der Endkomponente nicht zerstört wird. Die inneren Header dienen der Identifizierung des Bearers. Der Grundgedanke besteht nun darin, Teile einer eindeutigen Endgerätekennung, z. B. der RNTI, zu verwenden [TS 25.331], wie sie in existierenden GSM/GPRS/UMTS-Architekturen eingesetzt wird. Diese Endgerätekennung identifiziert dort die jeweiligen Endgeräte-Bearer und ist, z. B. in ihrer Short-Definition, l2 Bits (Long-Version 20 Bits) lang. Weiterhin sind noch einige Bits nötig, um eine Flow-Identifikation zuzulassen. Ein Shim-Header bzw. MPLS-Header bietet Raum für 20 Bits pro Header. Somit reichen maximal zwei Shim-Header bzw. MPLS-Header zum eineindeutigen Abbilden der aus IPv6 nötigen Informationen auf MPLS-Labels aus. IPv6-DiffServ kann direkt übernommen werden, da es in den Shim-Headern bzw. MPLS-Headern unterstützt wird. Man erhält sich die Kompatibilität zu existierenden Einrichtungen und Funktionsweisen, da intern nun die Shim-Header bzw. MPLS-Header wieder eineindeutig einem IPv6-Header zugeordnet bzw. durch diesen ersetzt werden können, womit die Architektureigenschaften und Vorteile, welche aus IPv6 resultieren, vollständig erhalten bleiben.

Hierdurch wird sichergestellt, dass mit Hilfe von existierenden Architekturkomponenten, die die Kompatibilität erhalten, eine höhere Effizienz des Netzwerkes erreicht wird. In der Regel bietet sich z. B. die existierende RNTI an, da durch ihre 20 Bits Länge ein direktes Mapping auf das 20 Bit-Label ermöglicht wird. Im Netz kann somit ein Rückfall auf Label-Switching erfolgen, womit Netzressourcen eingespart werden. Im Detail wird die Aufgabe durch ein Verfahren zum Austausch von Informationen zwischen Komponenten in einem Netzwerk, das vorzugsweise aus einem Core-Netzwerk und einem Radio-Access-Netzwerk besteht, gelöst.

Bestandteile des Netzwerkes sind Endgeräte, die über das Netzwerk IP-Informationspakete austauschen, die über IP-Header mit IP-Adressen verfügen. Die Endgeräte sind vorzugsweise mobile Endgeräte, wie Handys oder PDAs. Die Endgeräte weisen eine eindeutige Endgerätekennung auf, anhand derer sie in Netzwerk lokalisiert werden können.

In einem Speicherbereich werden eindeutige Endgerätekennungen in Relation zu IP-Adressen verwaltet. Hierdurch ist es möglich, eine Abbildung von den IP-Adressen zu den Endgerätekennungen und umgekehrt vorzunehmen.

Das Netzwerk weist zumindest eine Teilmenge von MPLS-fähigen Komponenten auf, die Informationspakete auf der Basis von MPLS-Pfaden und entsprechenden MPLS-Headern durch das Netzwerk routen. Die Komponenten sind in der Lage, sich in einem ersten Konfigurationsschritt so zu konfigurieren, dass die MPLS-Pfade zu den Endgeräten eindeutig sind, wobei die MPLS-Pfade durch die eindeutige Endgerätekennung, die in den MPLS-Headern abgebildet ist, zumindest durch eine Abbildung gekennzeichnet sind. Nachdem die Komponenten konfiguriert wurden, erfolgt in den folgenden Schritten der Informationsaustausch.

In einem zweiten Informationssendeschritt entfernen die am Anfang des Pfades liegenden MPLS-fähigen Komponenten die IP-Header aus dem IP-Informationspaket, um dann das so veränderte IP-Informationspaket mit MPLS-Headern zu versehen. Der hinzugefügte MPLS-Header enthält z. B. die Endgerätekennung, die in Relation zur IP-Adresse verwaltet wird, um dann das so modifizierte Datenpaket zu senden. In einem dritten Informationsempfangsschritt, der am Ende des Pfades liegt, lesen die MPLS-fähigen Komponenten die MPLS-Header der im zweiten Schritt gesendeten Informationspakte, um anhand der Endgerätekennung die zugehörige IP-Adresse zu ermitteln. Die IP-Adresse wird hierbei aus dem oben erwähnten Speicherbereich geladen. Bei diesem Speicherbereich kann es sich um einen zentralen wie auch um einen dezentralen Speicherbereich handeln. So ist es z. B. möglich, dass jede Komponente einen eigenen Speicherbereich aufweist, in dem die Abbildung vorgehalten wird.

Nachdem die IP-Adresse ermittelt wurde, wird das Informationspaket so verändert, dass der ursprüngliche IP-Header den MPLS-Header ersetzt.

In der Regel handelt es sich bei den Komponenten um bekannte Router, die vorzugsweise durch eine Software mit entsprechenden Hardwarekomponenten erweitert wurden, um somit die oben beschriebene Funktionalität zu realisieren.

In einer vorteilhaften Ausführungsform handelt es sich um ein UMTS- oder GPRS- Netzwerk oder ein ähnliches paketorientiertes Funknetz für mobile Endgeräte, wobei die Endgerätekennungen aus netzspezifischen RAI, RNTI (Radio Network Temporary Identities), IMSI (weitere herstellerspezifische Identifikationen sind denkbar) bestehen können. In Abhängigkeit des gewählten Netzes, bei dem diese Endgerätekennungen in einem speziellen Register verwaltet werden, handelt es sich hierbei z. B. um ein HLR (Home Location Register) oder um ein HSS (Home Subscriber Service). Diese Register werden so erweitert, dass neben der Endgerätekennung ein IP-Header und/oder eine IP-Adresse abgelegt werden, wodurch eine eindeutige bijektive Abbildung ermöglicht wird.

In einer weiteren Ausgestaltungsform, sind die Endgeräte selbst in der Lage, den Austausch der Header vorzunehmen. In diesem Falle wird lediglich ein Gateway benötigt, der beim Übergang in ein weiteres, externes Netzwerk, das die vorgestellte Technologie nicht unterstützt, eine Abbildung vornimmt. Beim Eintreffen eines Informationspaketes aus dem externen Netz wird der IP-Header entfernt, und beim Senden eines Paketes in das externe Netzwerk wird der IP-Header einfügt, wobei die Kommunikation im internen Netzwerk auf der Basis der MPLS-Header erfolgt. Der Gateway hat ebenfalls Zugriff auf den Speicherbereich, in dem die Abbildung der IP-Header auf die Gerätekennungen abgelegt sind.

In einer alternativen Ausführungsform enthalten die MPLS-Äquivalenzklassen neben dem Pfad-Label auch mindestens ein Label, dass die Endgerätekennung codiert, wodurch festgestellt werden kann, welcher Pfad für welches Endgerät bestimmt ist. Bei diesen Äquivalenzklassen handelt es sich vorzugsweise um die Eingangsäquivalenzklassen, d. h. die Klassen, die berücksichtigt werden, wenn ein Paket bei der Komponente eintrifft. Durch die Verwendung eines zweiten Labels innerhalb der MPLS-Äquivalenzklasse wird festgelegt, dass die Endgerätekennung Bestandteil des eindeutigen Pfades ist.

In einer weiteren Ausführungsform wird nicht der vollständige IP-Header entfernt, sondern lediglich Teile des IP-Headers. Hierdurch entsteht weniger Aufwand beim Einfügen und Löschen der Adressen.

In einer weiteren vorteilhaften Ausführungsformen werden mehrere MPLS-Labels verwendet, um einen IP-Header auf einen MPLS-Header abzubilden und umgekehrt. Ein entsprechender Fall wurde bereits oben beschrieben.

Ein weiterer Bestandteil der Erfindung ist ein Sender, der das beschriebene Verfahren umsetzt. Der Sender ist vorzugsweise in einem Netzwerk angeordnet, das aus einem Core-Netzwerk und einem Radio-Access-Netzwerk besteht. Soweit der Sender nicht selber ein Endgerät ist, hat der Sender die vermittelnde Aufgabe, die Kommunikation von Endgeräten zu realisieren. Die Endgeräte tauschen über das Netzwerk IP-Informationspakete aus, die über IP-Header mit IP-Adressen verfügen. Der Sender weist Mittel auf, die einen Zugriff auf einen Speicherbereich erlauben, in dem eindeutige Endgerätekennungen in Relation zu IP-Adressen verwaltet werden. Bei diesen Mitteln handelt es sich vorzugsweise um eine Netzwerkschnittstelle, soweit es sich um einen zentralen Server handelt, der den Speicherbereich verwaltet. Handelt es sich hingegen um einen dezentralen Speicherbereich, der vom Sender selber verwaltet wird, so sind diese Mittel in der Regel Speicher, Controller und Mikroprozessoren oder ein spezieller Chipsatz, der auf den Speicherzugriff optimiert ist.
Der Sender umfasst weiterhin Mittel, die die Informationspakete auf der Basis von MPLS-Pfaden und entsprechenden MPLS-Headern durch das Netzwerk routen. Bei diesen Mitteln handelt es sich vorzugsweise um bekannte Switching-Fabrics, wie sie zum Stand der Technik gehören.
Eine Bearbeitungseinheit, die vorzugsweise als Prozessor oder als Switching-Fabric ausgebildet ist, entfernt IP-Header aus dem IP-Informationspaket, um dann das so veränderte IP-Informationspaket mit MPLS-Headern zu versehen, wobei der MPLS-Header die Endgerätekennung enthält, die in Relation zur IP-Adresse verwaltet wird. Die so modifizierten Datenpakete werden dann über den entsprechenden MPLS-Pfad zum Endgerät gesendet.

Gegebenenfalls ist es notwendig, dass die Mittel für den Speicherzugriff die entsprechende Adresse bzw. den Header aus dem Speicherbereich laden.

Um die eindeutigen Pfade zum Endgerät im Vorfeld zu konfigurieren beziehungsweise die Äquivalenzklasse anzulegen, sind Mittel vorgesehen, die den Sender so konfigurieren, dass die MPLS-Pfade zu den Endgeräten eindeutig sind, wobei die MPLS-Pfade durch die eindeutige Endgerätekennung, die in den MPLS-Headern abgebildet ist, gekennzeichnet sind. Bei diesen Mitteln handelt es sich vorzugsweise um eine Netzwerkschnittstelle und eine entsprechende Bearbeitungseinheit, die entweder ein Mikroprozessor oder die Switching-Fabric ist. In der Regel werden bekannte Module durch entsprechende Software so erweitert, dass die benötigte Funktionalität realisiert werden kann.

In einer bevorzugten Ausführungsform, bei der der Speicherbereich dezentral beim Sender verwaltet wird, werden die Endgerätekennungen den entsprechenden MPLS-Äquivalenzklassen zugeordnet, wobei die Endgerätekennungen bereits als MPLS-Label bzw. MPLS-Header codiert sind.

Neben dem Sender ist ein Empfänger ein weiterer wesentlicher Bestandteil der vorliegenden Erfindung. Der Empfänger ist ein entsprechendes Gegenstück zum Sender. Er ist somit im gleichen Netzwerk angeordnet. Es ist darauf hinzuweisen, dass der Empfänger und der Sender in der Regel Router sind, die den Eingang und den Ausgang eines MPLS-Pfades darstellen. Die Komponenten, die innerhalb des Pfades liegen, brauchen die erweiterte Funktionalität nicht. Der Empfänger weist ebenfalls Mittel auf, die einen Zugriff auf einen Speicherbereich erlauben, in dem eindeutige Endgerätekennungen in Relation zu IP-Adressen verwaltet werden. Hierbei kann es sich sowohl um Mittel handeln, die einen zentralen als auch einen dezentralen bzw. lokalen Zugriff auf den Speicherbereich ermöglichen. In der Regel handelt es sich um die gleichen Mittel, wie sie beim Sender verwendet werden.
Weiterhin umfasst der Empfänger Mittel, die die Informationspakete auf der Basis von MPLS-Pfaden und entsprechenden MPLS-Headern aus dem Netzwerk empfangen. Hierbei handelt es sich in der Regel um eine Netzwerkschnittstelle mit einem entsprechenden Treiber, wobei die so empfangenen Pakete an die Bearbeitungseinheit weitergeleitet werden.
Die Bearbeitungseinheit analysiert die Informationspakete, um festzustellen, ob der IP-Header entfernt wurde. Sollte dies der Fall sein, so wird im positiven Falle anhand der Endgerätekennung die zugehörige IP-Adresse durch einen Speicherzugriff ermittelt, um dann das Informationspaket so zu verändern, dass der ursprüngliche IP-Header den MPLS-Header ersetzt.

Auch bei dieser Bearbeitungseinheit handelt es sich vorzugsweise um eine bekannte Switching-Fabric und/oder einen Mikroprozessor, die mit Hilfe einer entsprechenden Software um die notwendige Funktionalität erweitert wurden.

Weitere Bestandteile des Empfängers sind Mittel, die den Empfänger so konfigurieren, dass die MPLS-Pfade zu den Endgeräten eindeutig sind, wobei die MPLS-Pfade durch die eindeutige Engerätekennung, die in den MPLS-Headern abgebildet ist, gekennzeichnet sind. Hierbei handelt es sich um ähnliche Mittel wie beim Sender, wobei jedoch vornehmlich die Äquivalenzklassen bestimmt werden, die zu berücksichtigen sind, wenn die Informationspakete eintreffen.

In einer dezentralen Lösung werden die Endgerätekennungen, als MPLS-Label codiert und einer bestimmten Äquivalenzklasse zugeordnet, die den eindeutigen Pfad zum Endgerät bestimmt.

In der Regel weisen Router oder Gateways sowohl die Merkmale eines Senders als auch eines Empfängers auf. In einer weiteren Ausführungsform, bei der die MPLS Pfade bis unmittelbar zum Endgerät reichen, weist das Endgerät die beschriebenen Merkmale des Senders und des Empfängers auf. In einer optimierten Version ist dann die Umsetzung der IP-Adressen nicht mehr notwendig, soweit man sich in einem homogenen Netzwerk befindet. Erst wenn durch einen Gateway das Netzwerk verlassen wird, ist eine Umsetzung bzw. Abbildung notwendig.

Weitere Ausführungsformen sind den Unteransprüchen zu entnehmen.

Im Folgenden wird anhand von Figuren der Ablauf schematisch dargestellt. Es zeigt:
- Figur 1: ein Netzwerk, bestehend aus einem Core-Netzwerk und einem Radio-Access-Netzwerk mit einem Sender, der vorzugsweise als Gateway ausgebildet ist, und einem Empfänger, der die Informationspakete über eine Basisstation an ein Endgerät weiterleitet, wobei zwischen Sender und Empfänger die ursprünglichen IP-Informationspakete in MPLS-Informationspakete umgewandelt werden;
- Figur 2: zeigte die Informationspakete während der unterschiedlichen Übertragungszustände, wobei erst nach einer Bestätigung durch ein Acknowledge-Paket die optimierte Übertragung stattfindet.

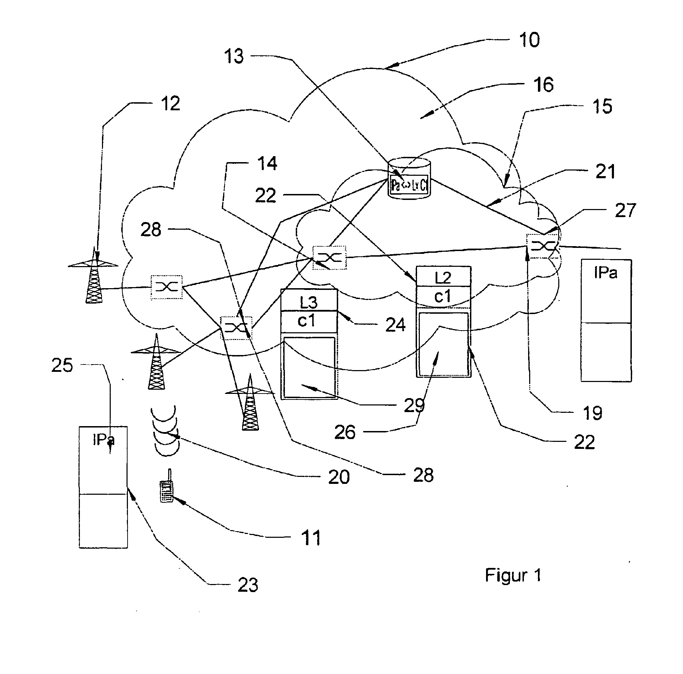

Die Figur 1 zeigt einen grundsätzlichen Aufbau eines Netzwerks im Funkbereich. Eine Netzwerkarchitektur 10 besteht hierbei aus einem Radio-Access-Netzwerk 16 und einem Core-Netzwerk 15. Das Core-Netzwerk 15 kann über einen Gateway/ Router 19 die Verbindung zum Internet herstellen. Beide Netzwerke bestehen aus einer Reihe von Komponenten 19, 13, 12, 14.

Ein User-Plane-Server (UPS) 14 verwaltet das Funkprotokoll 20, um Informationspakete über Funkschnittstellen zum Endgerät 11 zu transportieren. Ein Radio-Control-Server 16 (RCS) verwaltet das Frequenzband und erlaubt die Zuteilung bzw. lehnt die Zuteilung von Frequenzen ab, falls ein Engpass entstehen sollte. Diese beiden Komponenten, die auch Routerfunktionalitäten aufweisen, bilden mit den entsprechenden Kabelverbindungen 21 das Radio-Access-Netzwerk 16.

Das Core-Netzwerk umfasst wiederum Router 19, die mit dem UPS in Verbindung stehen. Ein HLR (Home-Location-Register) 13 verwaltet die eindeutige Kennung des Endgerätes und seine aktuelle Position. Weiterhin umfasst das HLR 13 die Abbildung der IP-Adresse auf die MPLS-Header bzw. Labels. Im vorliegenden Beispiel wird diese Abbildung dezentral abgelegt. Sender 27 und der Empfänger 28 haben auf dieses Register Zugriff.

Diese Position ist jedoch in der Regel lediglich eine Regionsangabe. Weiterhin verwaltet das HLR/HSS die Rufnummern und die aktuelle IP-Adresse.

Die Komponenten des Core-Netzwerkes und des Radio-Access-Netzwerkes sind über Glasfaserkabel oder Kupferkabel 21 miteinander verbunden. Es ist jedoch denkbar, dass diese Komponenten durch eine Richtfunkverbindung miteinander in Kontakt stehen.

Ein Sender 27 empfängt ein Informationspaket 22, das einen IP-Header 25 aufweist. Mit Hilfe der IP-Adresse wird die Gerätekennung ermittelt, die im vorliegenden Fall in zwei MPLS-Headern 24 codiert wird. Diese MPLS-Header liegen im Stack im Informationspaket 22, das ausschließlich MPLS-Header aufweist.

Der Sender 27 entfernt nun den IP-Header 25 und fügt weitere Informationen hinzu, sodass der Datenbereich 29 größer ausfällt. Das so modifizierte Paket 26 wird über einen weiteren Router, der den ersten MPLS-Header entsprechend des Standards modifiziert, zum Empfänger 28 weitergeleitet. Der Empfänger 28 entfernt nun den MPLS-Header 24 und ersetzt diesen durch einen IP-Header. Den korrekten IP-Header ermittelt der Empfänger auf der Basis der Informationen, die im Register 13 abgelegt sind. In einer alternativen Ausführungsform können diese Informationen auch lokal beim Empfänger abgelegt sein. Die Verfahren zum Austausch der Abbildung wurden bereits oben beschrieben. Auf Grund des variierenden Datenbereichs 29 kann es passieren, dass mehrere Pakete zusammengefasst oder auseinandergerissen werden. Eine entsprechende Nummerierung dieser Pakete ist Stand der Technik.

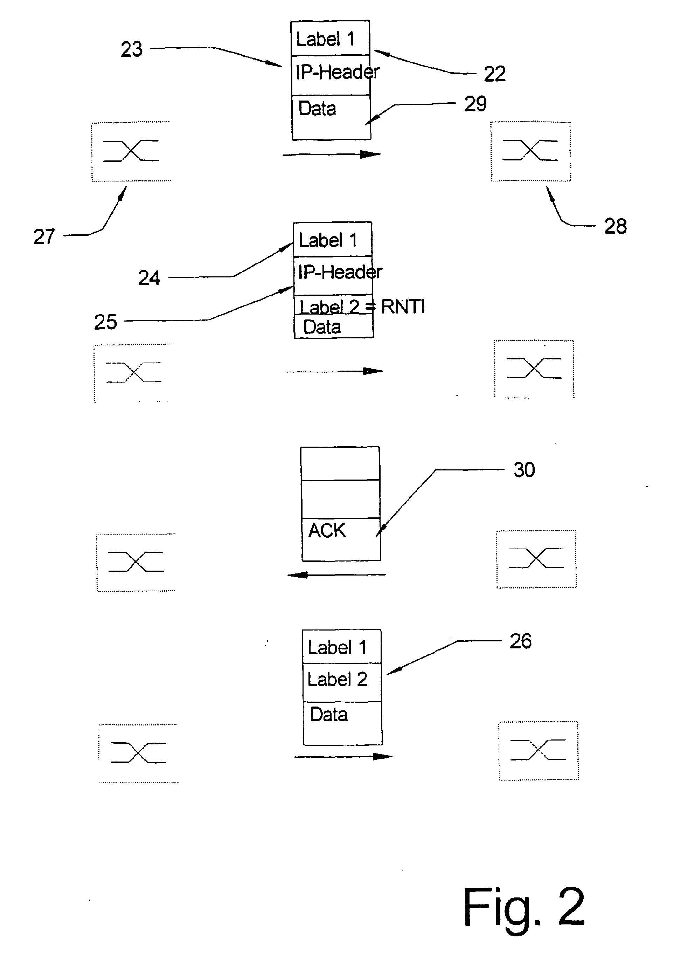

Figur 2 zeigt ein Übertragungsverfahren, bei dem vier Zustände beschrieben werden. Diese vier Zustände spiegeln die Kommunikation im Netzwerk wider. Im ersten Zustand erfolgt die Übertragung in Form von getunnelten IP-Paketen. Während des zweiten Zustandes wird ein weiteres Label eingefügt, das die IP-Adresse in Zukunft ersetzen soll. Dieses Label kann die RNTI kodieren. Andere eindeutige Kennungen sind ebenfalls denkbar. Erst nachdem die Gegenseite, also der Empfänger, eine Bestätigung 30 gesendet hat, in der sie Auskunft gibt, dass die Abbildung gelernt wurde, erfolgt im vierten Zustand eine durchgängige Übertragung.

## Patentansprüche

1. Verfahren zum Austausch von Informationen zwischen Komponenten (19, 13, 12, 14) in einem Netzwerk mit Endgeräten (11), die über das Netzwerk IP-Informationspakete (22) austauschen, die über IP-Header (25) mit IP-Adressen verfügen,
mit einem Speicherbereich, in dem eindeutige Endgerätekennungen in Relation zu IP-Adressen verwaltet werden,
mit zumindest einer Teilmenge von MPLS-fähigen Komponenten in dem Netzwerk, die Informationspakete (22) auf der Basis von MPLS-Pfaden und entsprechenden MPLS-Headern (24) durch das Netzwerk routen,
- mit einem ersten Konfigurationsschritt bei dem die Komponenten (19, 13, 12, 14) so konfiguriert werden, dass die MPLS-Pfade zu den Endgeräten (11) eindeutig sind, wobei die MPLS-Pfade durch die eindeutige Engerätekennung, die in den MPLS-Headern (24) abgebildet ist, gekennzeichnet sind,
- mit einem zweiten Informationssendeschritt, bei dem die MPLS-fähigen Komponenten die IP-Header (25) oder Teile davon aus dem IP-Informationspaket (22) entfernen, um dann das so veränderte IP-Informationspaket (22) mit MPLS-Headern (24) zu versehen, wobei der MPLS-Header (24) die Endgerätekennung enthält, die in Relation zur IP-Adresse verwaltet wird, um dann das so modifizierte Datenpaket (26) zu senden,
- mit einem dritten Informationsempfangsschritt, bei dem die MPLS-fähigen Komponenten die MPLS-Header (24) der im zweiten Schritt gesendeten Informationspakete (22) lesen, um anhand der Endgerätekennung die zugehörige IP-Adresse zu ermitteln, um dann das Informationspaket (22) so zu verändern, dass der ursprüngliche IP-Header (25) den MPLS-Header (24) ersetzt.

2. Verfahren nach dem vorhergehenden Anspruch, **dadurch gekennzeichnet, dass** die Komponenten (19, 13, 12, 14) Mittel aufweisen, die eine Funktionalität eines Routers (19) realisieren.

3. Verfahren nach einem oder mehreren der vorhergehenden Ansprüche, **dadurch gekennzeichnet, dass** das Netzwerk ein UMTS oder GPRS oder ein ähnliches paketorientiertes Funknetz für mobile Endgeräte (11) ist, wobei die Endgerätekennungen aus netzspezifischen RAI, RNTI, IMSI sowie weiteren Identifikationen bestehen.

4. Verfahren nach dem vorhergehenden Anspruch, **dadurch gekennzeichnet, dass** der Speicherbereich, in dem die Endgerätekennung abgelegt ist, ein HLR (13) oder HSS ist.

5. Verfahren nach dem vorhergehenden Anspruch, **dadurch gekennzeichnet, dass** im Speicherbereich die Endgerätekennungen in Relation zu den IP-Headern (25) und/oder IP-Adressen abgelegt sind.

6. Verfahren nach einem oder mehreren der vorhergehenden Ansprüche, **dadurch gekennzeichnet, dass** lediglich ein Gateway (19) zu einem externen Netzwerk beim Eintreffen eines Informationspaketes (22) aus dem externen Netz den IP-Header (25) entfernt und beim Senden eines Paketes in das externe Netzwerk den IP-Header (25) einfügt, wobei die Kommunikation im internen Netzwerk auf der Basis der MPLS-Header (24) erfolgt.

7. Verfahren nach einem oder mehreren der vorhergehenden Ansprüche, **dadurch gekennzeichnet, dass** die MPLS-Äquivalenzklassen neben dem Pfad-Label auch mindestens ein Label enthalten, dass die Endgerätekennung codiert, wodurch festgestellt werden kann, welcher Pfad für welches Endgerät (11) bestimmt ist.

8. Verfahren nach einem oder mehreren der vorhergehenden Ansprüche, **dadurch gekennzeichnet, dass** nicht der vollständige IP-Header (25) entfernt wird, sondern lediglich Teile des IP-Headers (25).

9. Sender (27) von Informationen, die in einem Netzwerk ausgetauscht werden, über das Endgeräte (11) miteinander kommunizieren, indem die Endgeräte (11) über das Netzwerk IP-Informationspakete (22) austauschen, die über IP-Header (25) mit IP-Adressen verfügen,
- mit Mitteln, die einen Zugriff auf einen Speicherbereich erlauben, in dem eindeutige Endgerätekennungen in Relation zu IP-Adressen verwaltet werden,
- mit Mitteln, die die Informationspakete (22) auf der Basis von MPLS-Pfaden und entsprechenden MPLS-Headern (24) durch das Netzwerk routen,
- mit einer Bearbeitungseinheit, die IP-Header (25) aus dem IP-Informationspaket (22) entfernen, um dann das so veränderte IP-Informationspaket (22) mit MPLS-Headern (24) zu versehen, wobei der MPLS-Header (24) die Endgerätekennung enthält, die in Relation zur IP-Adresse verwaltet wird, um dann das so modifizierte Datenpaket (26) über den MPLS-Pfad zu senden.

10. Sender (27) nach dem vorhergehenden Anspruch, **dadurch gekennzeichnet, dass** die Bearbeitungseinheit eine Switching-Fabric und/oder ein Mikroprozessor ist.

11. Sender (27) nach einem oder mehreren der vorhergehenden Ansprüche, **gekennzeichnet durch** Mittel, die den Sender (27) so konfigurieren, dass die MPLS-Pfade zu den Endgeräten (11) eindeutig sind, wobei die MPLS-Pfade **durch** die eindeutige Engerätekennung, die in den MPLS-Headern (24) abgebildet ist, gekennzeichnet sind.

12. Sender (27) nach einem oder mehreren der vorhergehenden Ansprüche, **dadurch gekennzeichnet, dass** die Endgerätekennung von einem zentralen Server geladen wird, der vorzugsweise über ein Netzwerk erreichbar ist.

13. Sender (27) nach einem oder mehreren der vorhergehenden Ansprüche, **dadurch gekennzeichnet, dass** die Endgerätekennung in der MPLS-Äquivalenzklasse als mögliches Label codiert ist.

14. Empfänger (28) von Informationen, die in einem Netzwerk ausgetauscht werden, über das Endgeräte (11) miteinander kommunizieren, indem die Endgeräte (11) über das Netzwerk IP-Informationspakete (22) austauschen, die über IP-Header (25) mit IP-Adressen verfügen,
- mit Mitteln, die einen Zugriff auf einen Speicherbereich erlauben, in dem eindeutige Endgerätekennungen in Relation zu IP-Adressen verwaltet werden,
- mit Mitteln, die die Informationspakete (22) auf der Basis von MPLS-Pfaden und entsprechenden MPLS-Headern (24) aus dem Netzwerk empfangen,
- mit einer Bearbeitungseinheit, die nach der Analyse des Informationspaketes (22) feststellt, ob der IP-Header (25) entfernt wurde, um im positiven Falle anhand der Endgerätekennung die zugehörige IP-Adresse zu ermitteln, um dann das Informationspaket (22) so zu verändern, dass der ursprüngliche IP-Header (25) den MPLS-Header (24) ersetzt.

15. Empfänger (28) nach dem vorhergehenden Anspruch, **dadurch gekennzeichnet, dass** die Bearbeitungseinheit eine Switching-Fabric und/oder ein Mikroprozessor ist.

16. Empfänger (28) nach einem oder mehreren der vorhergehenden Ansprüche, **gekennzeichnet durch** Mittel, die den Empfänger (28) so konfigurieren, dass die MPLS-Pfade zu den Endgeräten (11) eindeutig sind, wobei die MPLS-Pfade durch die eindeutige Engerätekennung, die in den MPLS-Headern (24) abgebildet ist, gekennzeichnet sind.

17. Empfänger (28) nach einem oder mehreren der vorhergehenden Ansprüche, **dadurch gekennzeichnet, dass** die Endgerätekennung von einem zentralen Server geladen wird, der vorzugsweise über ein Netzwerk erreichbar ist.

18. Empfänger (28) nach einem oder mehreren der vorhergehenden Ansprüche, **dadurch gekennzeichnet, dass** die Endgerätekennung in der MPLS-Äquivalenzklasse als mögliches Label codiert ist.

19. Endgerät (11), **dadurch gekennzeichnet, dass** es die Merkmale der vorhergehenden Empfänger (28) und Sender (27) umfasst.

20. Router (19) und/oder Gateway (19), **dadurch gekennzeichnet, dass** es die Merkmale der vorhergehenden Empfänger (28) und Sender (27) umfasst.

## Claims

1. A method for exchanging information between components (19, 13, 12, 14) in a network having terminal devices (11) which exchange, via the network, IP information packets (22) which have IP headers (25) containing IP addresses, having a memory area in which unique terminal device identifiers are administered in relation to IP addresses,
having at least one subset of MPLS-capable components in the network which route information packets (22) through the network on the basis of MPLS paths and corresponding MPLS headers (24),
- having a first configuration step in which the components (19, 13, 12, 14) are configured such that the MPLS paths to the terminal devices (11) are unique, the MPLS paths being identified by means of the unique terminal device identifier which is mapped in the MPLS headers (24),
- having a second information transmit step in which the MPLS-capable components remove the IP headers (25) or parts thereof from the IP information packet (22) in order then to provide the thus modified IP information packet (22) with MPLS headers (24), the MPLS header (24) containing the terminal device identifier which is administered in relation to the IP address in order then to send the thus modified data packet (26),
- having a third information receive step in which the MPLS-capable components read the MPLS headers (24) of the information packets (22) sent in the second step in order to determine the associated IP address on the basis of the terminal device identifier in order then to modify the information packet (22) in such a way that the original IP header (25) replaces the MPLS header (24).

2. The method according to the preceding claim, **characterized in that** the components (19, 13, 12, 14) have means which implement a functionality of a router (19).

3. The method according to one or more of the preceding claims, **characterized in that** the network is a UMTS or GPRS or a similar packet-oriented radio network for mobile terminal devices (11), wherein the terminal device identifiers consist of network-specific RAI, RNTI or IMSI and further identifications.

4. The method according to the preceding claim, **characterized in that** the memory area in which the terminal device identifier is stored is an HLR (13) or HSS.

5. The method according to the preceding claim, **characterized in that** the terminal device identifiers are stored in the memory area in relation to the IP headers (25) and/or IP addresses.

6. The method according to one or more of the preceding claims, **characterized in that** only a gateway (19) to an external network removes the IP header (25) when an information packet (22) arrives from the external network and inserts the IP header (25) when a packet is transmitted into the external network, the communication in the internal network taking place on the basis of the MPLS headers (24).

7. The method according to one or more of the preceding claims, **characterized in that** in addition to the path label the MPLS equivalence classes also contain at least one label which codes the terminal device identifier, by means of which it can be determined which path is intended for which terminal device (11).

8. The method according to one or more of the preceding claims, **characterized in that** the entire IP header (25) is not removed, but only parts of the IP header (25).

9. A transmitter (27) of information which is exchanged in a network via which terminal devices (11) communicate with one another, whereby the terminal devices (11) exchange, via the network, IP information packets (22) which have IP headers (25) containing IP addresses,
- having means which permit access to a memory area in which unique terminal device identifiers are administered in relation to IP addresses,
- having means which route the information packets (22) through the network on the basis of MPLS paths and corresponding MPLS headers (24),
- having a processing unit which removes IP headers (25) from the IP information packet (22) in order then to provide the thus modified IP information packet (22) with MPLS headers (24), the MPLS header (24) containing the terminal device identifier which is administered in relation to the IP address in order then to transmit the thus modified data packet (26) via the MPLS path.

10. The transmitter (27) according to the preceding claim, **characterized in that** the processing unit is a switching fabric and/or a microprocessor.

11. The transmitter (27) according to one or more of the preceding claims, **characterized by** means which configure the transmitter (27) in such a way that the MPLS paths to the terminal devices (11) are unique, the MPLS paths being identified by the unique terminal device identifier which is mapped in the MPLS headers (24).

12. The transmitter (27) according to one or more of the preceding claims, **characterized in that** the terminal device identifier is loaded by a central server which is preferably accessible via a network.

13. The transmitter (27) according to one or more of the preceding claims, **characterized in that** the terminal device identifier is coded as a possible label in the MPLS equivalence class.

14. A receiver (28) of information which is exchanged in a network via which terminal devices (11) communicate with one another, whereby the terminal devices (11) exchange, via the network, IP information packets (22) which have IP headers (25) containing IP addresses,
- having means which permit access to a memory area in which unique terminal device identifiers are administered in relation to IP addresses,
- having means which receive the information packets (22) from the network on the basis of MPLS paths and corresponding MPLS headers (24),
- having a processing unit which, following the analysis of the information packet (22), establishes whether the IP header (25) has been removed in order, in the positive case, to determine the associated IP address on the basis of the terminal device identifier in order then to modify the information packet (22) such that the original IP header (25) replaces the MPLS header (24).

15. The receiver (28) according to the preceding claim, **characterized in that** the processing unit is a switching fabric and/or a microprocessor.

16. The receiver (28) according to one or more of the preceding claims, **characterized by** means which configure the receiver (28) in such a way that the MPLS paths to the terminal devices (11) are unique, the MPLS paths being identified by the unique terminal device identifier which is mapped in the MPLS headers (24).

17. The receiver (28) according to one or more of the preceding claims, **characterized in that** the terminal device identifier is loaded by a central server which can preferably be accessed via a network.

18. The receiver (28) according to one or more of the preceding claims, **characterized in that** the terminal device identifier is coded as a possible label in the MPLS equivalence class.

19. A terminal device (11), **characterized in that** it comprises the features of the preceding receiver (28) and transmitter (27).

20. A router (19) and/or gateway (19), **characterized in that** it comprises the features of the preceding receiver (28) and transmitter (27).

## Revendications

1. Procédé d'échange d'informations entre des composants (19, 13, 12, 14) dans un réseau comportant des terminaux (11) qui échangent via le réseau des paquets d'informations IP (22) qui disposent d'en-têtes IP (25) avec des adresses IP,
comportant une zone de mémoire dans laquelle sont gérés des identifiants de terminaux univoques en relation avec des adresses IP,
comportant au moins un sous-ensemble de composants aptes au MPLS dans le réseau, lesquels assurent le routage de paquets d'informations (22) sur la base de chemins MPLS et d'en-têtes MPLS correspondants (24) à travers le réseau,
- comportant une première étape de configuration, selon laquelle les composants (19, 13, 12, 14) sont configurés de telle sorte que les chemins MPLS vers les terminaux (11) soient univoques, les chemins MPLS étant **caractérisés par** l'identifiant de terminal univoque qui est reproduit dans les en-têtes MPLS (24),
- comportant une deuxième étape d'émission d'informations, selon laquelle les composants aptes au MPLS retirent les en-têtes IP (25) ou des parties de ces en-têtes du paquet d'informations IP (22) pour ensuite pourvoir d'en-têtes MPLS (24) le paquet d'informations IP (22) ainsi modifié, l'en-tête MPLS (24) contenant l'identifiant de terminal qui est géré en relation avec l'adresse IP pour ensuite émettre le paquet de données (26) ainsi modifié,
- comportant une troisième étape de réception d'informations, selon laquelle les composants aptes au MPLS lisent les en-têtes MPLS (24) des paquets d'informations (22) émis à la deuxième étape pour déterminer, sur la base de l'identifiant de terminal, l'adresse IP associée pour ensuite modifier le paquet d'informations (22) de manière telle que l'en-tête IP d'origine (25) remplace l'en-tête MPLS (24).

2. Procédé selon la revendication précédente, **caractérisé en ce que** les composants (19, 13, 12, 14) comportent des moyens qui réalisent une fonctionnalité d'un routeur (19).

3. Procédé selon l'une ou plusieurs des revendications précédentes, **caractérisé en ce que** le réseau est un réseau radio UMTS ou GPRS ou un réseau radio orienté paquets similaire pour terminaux mobiles (11), les identifiants de terminaux consistant en identifications RAI, RNTI, IMSI et autres, qui sont spécifiques au réseau.

4. Procédé selon la revendication précédente, **caractérisé en ce que** la zone de mémoire dans laquelle est déposé l'identifiant de terminal est un HLR (13) ou un HSS.

5. Procédé selon la revendication précédente, **caractérisé en ce que** sont déposés, dans la zone de mémoire, les identifiants de terminaux en relation avec les en-têtes IP (25) et/ou adresses IP.

6. Procédé selon l'une ou plusieurs des revendications précédentes, **caractérisé en ce que** seulement une passerelle (19) vers un réseau externe retire l'en-tête IP (25) à l'arrivée d'un paquet d'informations (22) du réseau externe et insère l'en-tête IP (25) à l'envoi d'un paquet au réseau externe, la communication dans le réseau interne s'effectuant sur la base des en-têtes MPLS (24).

7. Procédé selon l'une ou plusieurs des revendications précédentes, **caractérisé en ce que** les classes d'équivalence MPLS contiennent, outre l'étiquette de chemin, au moins une étiquette qui code l'identifiant de terminal, de sorte qu'il est possible de constater quel chemin est destiné à quel terminal (11).

8. Procédé selon l'une ou plusieurs des revendications précédentes, **caractérisé en ce que** ce n'est pas l'en-tête IP complet (25), mais uniquement des parties de l'en-tête IP (25) qui sont retirées.

9. Émetteur (27) d'informations qui sont échangées dans un réseau via lequel des terminaux (11) communiquent entre eux en échangeant via le réseau des paquets d'informations IP (22) qui disposent d'en-têtes IP (25) avec des adresses IP,
- comportant des moyens qui permettent un accès à une zone de mémoire dans laquelle sont gérés des identifiants de terminaux univoques en relation avec des adresses IP,
- comportant des moyens qui assurent le routage des paquets d'informations (22) sur la base de chemins MPLS et d'en-têtes MPLS correspondants (24) à travers le réseau,
- comportant une unité de traitement qui retire des en-têtes IP (25) du paquet d'informations IP (22) pour ensuite pourvoir d'en-têtes MPLS (24) le paquet d'informations IP (22) ainsi modifié, l'en-tête MPLS (24) contenant l'identifiant de terminal qui est géré en relation avec l'adresse IP pour ensuite émettre, via le chemin MPLS, le paquet de données (26) ainsi modifié.

10. Émetteur (27) selon la revendication précédente, **caractérisé en ce que** l'unité de traitement est une switching fabric et/ou un microprocesseur.

11. Émetteur (27) selon l'une ou plusieurs des revendications précédentes, **caractérisé par** des moyens qui configurent l'émetteur (27) de telle sorte que les chemins MPLS vers les terminaux (11) soient univoques, les chemins MPLS étant **caractérisés par** l'identifiant de terminal univoque qui est reproduit dans les en-têtes MPLS (24).

12. Émetteur (27) selon l'une ou plusieurs des revendications précédentes, **caractérisé en ce que** l'identifiant de terminal est chargé par un serveur central qui est joignable de préférence via un réseau.

13. Émetteur (27) selon l'une ou plusieurs des revendications précédentes, **caractérisé en ce que** l'identifiant de terminal est codé en tant qu'étiquette possible dans la classe d'équivalence MPLS.

14. Récepteur (28) d'informations qui sont échangées dans un réseau via lequel des terminaux (11) communiquent entre eux en échangeant via le réseau des paquets d'informations IP (22) qui disposent d'en-têtes IP (25) avec des adresses IP,
- comportant des moyens qui permettent un accès à une zone de mémoire dans laquelle sont gérés des identifiants de terminaux univoques en relation avec des adresses IP,
- comportant des moyens qui reçoivent du réseau les paquets d'informations (22) sur la base de chemins MPLS et d'en-têtes MPLS correspondants (24) ;
- comportant une unité de traitement qui, après l'analyse du paquet d'informations (22), constate si l'en-tête IP (25) a été retiré pour déterminer, dans le cas positif, sur la base de l'identifiant de terminal, l'adresse IP associée pour ensuite modifier le paquet d'informations (22) de telle sorte que l'entête IP d'origine (25) soit remplacé par l'en-tête MPLS (24).

15. Récepteur (28) selon la revendication précédente, **caractérisé en ce que** l'unité de traitement est une switching fabric et/ou un microprocesseur.

16. Récepteur (28) selon l'une ou plusieurs des revendications précédentes, **caractérisé par** des moyens qui configurent le récepteur (28) de telle sorte que les chemins MPLS vers les terminaux (11) soient univoques, les chemins MPLS étant **caractérisés par** l'identifiant de terminal univoque qui est reproduit dans les en-têtes MPLS (24).

17. Récepteur (28) selon l'une ou plusieurs des revendications précédentes, **caractérisé en ce que** l'identifiant de terminal est chargé par un serveur central qui est joignable de préférence via un réseau.

18. Récepteur (28) selon l'une ou plusieurs des revendications précédentes, **caractérisé en ce que** l'identifiant de terminal est codé en tant qu'étiquette possible dans la classe d'équivalence MPLS.

19. Terminal (11), **caractérisé en ce qu'**il inclut les caractéristiques du récepteur (28) et de l'émetteur (27) précédents.

20. Routeur (19) et/ou passerelle (19), **caractérisé en ce qu'**ils incluent les caractéristiques du récepteur (28) et de l'émetteur (27) précédents.
